# EUROPEAN PATENT SPECIFICATION

(11) **EP 3 954 566 B1**
(45) Date of publication and mention of the grant of the patent: **01.04.2026**
(21) Application number: 20190789.6
(22) Date of filing: 12.08.2020
(51) Int. Cl.: B60K 37/00, B60Q 3/14, B60R 11/02, B60R 13/02, G06F 3/01, G06F 3/0488, B60Q 3/54, B60K 37/20, B60R 11/00

(54) **INTERIOR PART OF A VEHICLE, METHOD FOR MANUFACTURING A SURFACE BODY OF SUCH AN INTERIOR PART AND VEHICLE COMPRISING SUCH AN INTERIOR PART**
INNENTEIL EINES FAHRZEUGS, VERFAHREN ZUR HERSTELLUNG EINES OBERFLÄCHENKÖRPERS SOLCH EINES INNENTEILS UND FAHRZEUG MIT SOLCH EINEM INNENTEIL
PIÈCE INTÉRIEURE D'UN VÉHICULE, PROCÉDÉ DE FABRICATION D'UN CORPS DE SURFACE D'UNE TELLE PARTIE INTÉRIEURE ET VÉHICULE COMPRENANT UNE TELLE PARTIE INTÉRIEURE

(43) Date of publication of application: 16.02.2022
(73) Proprietor: Motherson Innovations Company Limited, London E14 5HU (GB)
(72) Inventor: DORMANNS, Dr. Jan, 79183 Waldkirch (DE); WEINGÄRTNER, Torsten, 79108 Freiburg (DE); BUCHET, Yann, 67000 Strasbourg (FR)
(74) Representative: Westphal, Mussgnug & Partner Patentanwälte mbB

(56) References cited:
- DE-A1- 102012 101 315
- DE-A1- 102016 219 288
- JP-A- 2009 295 365
- ANONYMOUS: "Polyolefin - Wikipedia", 11 December 2023 (2023-12-11), XP093110726, Retrieved from the Internet <URL:https://en.wikipedia.org/wiki/Polyolefin> [retrieved on 20231211]

## Description

The present invention relates to an interior part for a vehicle. Furthermore, the present invention is directed to a method for manufacturing a surface body as a decorative top layer of such an interior part. Beyond that the present invention relates to a vehicle comprising such an interior part.

Ambient lighting is a key feature of modern vehicles by which the appearance of a passenger compartment can be set individually. Communication between vehicle and passenger is becoming more and more important, especially with the advancement of autonomous driving. Lighting in the passenger compartment is taking over specific tasks, like the visual indication of functions and warnings in the vehicle. Ambient lighting is increasingly becoming functional light. Lighting in the passenger compartment is becoming an important part of the design leading to an increase of the passenger comfort.

The light emitting devices can be arranged in manifold locations of interior parts of modern vehicles that are visible from the passenger compartment. Examples of such interior parts are instrument panels, door panels, center consoles, headliner and vehicle seats. The respective layout of illuminated interior parts comprises a surface body that is visible from the passenger compartment. The surface body transmits light but diffuses or scatters the light so that objects cannot be seen through it from a certain distance. To this end the surface body has a transmittance to light of at least 1% and is considered as translucent. The surface body comprises a first surface and a second surface. The second surface is visible from the passenger compartment. The first surface is laminated on a soft or a solid carrier body. Moreover, a light emitting device that emits light is arranged such that the light emitted by the light emitting device impinges on the first surface. Seen from the passenger compartment the light emitting device is arranged behind the surface body.

The way to create certain light patterns by employing layers of different transmittances to light is also referred to as "masking". These layers are applied to the first surface.

Thus these layers having a transmittance of 100% or almost 100% and transmitting light without scattering, so that objects can be seen through it, are considered as transparent to light whereas layers impervious to the passage of light are opaque and thus have a transmittance of 0% or almost 0%. For a further definition of the terms transparent, translucent and opaque, references is made to the also Dictionary of Optometry and Visual Science (Michel Millodot 2009).

In most cases the masking layer applied to the first surface of the surface body is opaque. In order to create a light pattern the masking layer only partially covers the first surface and forms gaps. Consequently the surface body comprises differences in thickness and stiffness between areas covered by the layer and the gaps. These differences can lead to optical flaws (e.g. sink marks) in the final surface body after laminating the surface body on a given interior part. This is of particular importance in light colored surfaces (e.g. white, beige), where several layers may be required.

JP 2009 295365 A, DE 10 2012 101315 A1 and DE 10 2016 219288 A1 are mentioned as prior art documents.

It is one task of the present invention to present an interior part of a vehicle having a surface body with a homogeneous appearance, whether the light emitting device is turned on or off, and that allows for an easy provision of different light patterns. Beyond that it is one objective of the present invention to present a method by which such interior parts may be manufactured in a fast, flexible and cost-efficient way. Furthermore, an embodiment of the present invention has the objective to provide a vehicle comprising such an interior part.

According to one embodiment of the present invention an interior part for a vehicle comprises
- at least one carrier body having a transmittance for light of at least 1%,
- a surface body forming a first surface and a second surface, having a transmittance for light of at least 1% and being laminated to the carrier body,
- at least one light emitting device emitting light and arranged such that the light emitted by the light emitting device impinges on the first surface,
- a masking section comprising a first layer applied to the first surface and having a first transmittance for light, the masking section partially covering the first surface by forming gaps, and
- at least one filling layer applied to the first surface at least partially filling at least some of the gaps and having a filling layer transmittance for light.

The term "laminated" is to be understood such that the surface body is fastened to the carrier body. A direct contact between the surface body and the carrier body is not mandatory. The transmittance for light of the surface body at least 1% but can be significantly higher, e.g. of 5 to 10%, of 10 to 20 or of 20 to 30%. By filling the gaps by the filling layer optical flaws such as sink marks can be avoided. The appearance of the interior part provided with such a surface body is very homogenous, regardless of whether or not the light emitting device is turned on. The first layer and the filling layer can have a very similar composition, mainly differing in the transmittance for light. The more similar the composition the easier the lamination process. Moreover, the stiffness they provide to the surface body is almost the same. The generation of stress as a result of temperature differences acting on the interior part can be kept low.

According to the invention the second surface is facing the interior of the vehicle, and the gaps that are not filled by the filling layer being arranged such that the gaps are invisible from the interior of the vehicle. Some of the interior parts of the vehicle are only partially visible from the passenger compartment. Examples may be the area of fastening sections by which the interior parts are fastened to a vehicle structure and where the interior parts may be covered by a vehicle trim part. The gaps arranged in the sections of the surface body that are not visible from the passenger compartment are not filled with the filling layer. This allows the amount of filling material to be kept small and the lamination application kept short without negatively influencing the appearance of the respective interior part.

In accordance with another embodiment a first masking section is applied to the first surface and a second masking section is applied to the filling layer. As a consequence the first masking section has a different distance from the light emitting device compared to the second masking section. The scattering depends on the distance from the light emitting device. As a consequence the light pattern created by the first masking section may have a sharp and clear contour while the light pattern created by the second masking section may be more blurred or diffuse. The variety of the light patterns can thereby be increased.

In a further embodiment the masking section comprises a second layer that is applied to the first surface, to the first surface between the surface body and the first layer, to the first layer, or to the filling layer, the second layer having a second transmittance for light. While the first transmittance for light may usually be chosen to be 0% (opaque) and the filling layer transmittance for light to be as high as possible to approach 100% (transparent), the second transmittance may be chosen between the two extremes, for example between 40 and 60% (translucent). While areas of the interior part covered by the first layer appear black and areas covered by the filling layer appear bright, the areas covered by the second layer appear darker than areas covered by the filling layer when the light emitting device is turned on. Light patterns of different brightness and thus of a greater variety can hereby be created. The concept of this embodiment can be transferred to further layers such that very detailed light patterns can be generated.

In accordance with a further embodiment a primary second layer is applied to the first surface and a secondary second layer is applied to the filling layer. The composition of the primary second layer and the secondary second layer are preferably the same and preferably equal the composition of the second layer. Also in this case the primary second layer is arranged in a distance to the light emitting device different from the secondary second layer. The patterns so created are differently blurred.

In a further embodiment the surface body is of a given color, the first layer is formed by a first sublayer and a second sublayer being arranged on top of each other, the first sublayer is applied to the first surface and has a color adjusted to the color of the surface body. Black or very dark first layers are usually opaque. In case the surface body is black or dark grey the application of a black first layer is not visible from the passenger compartment. However, in case the surface body is brown or beige a black first layer would be perceptible from the passenger compartment, due to the transmittance of the surface body.

In this embodiment the first layer is composed of a first sublayer and a second sublayer. The second sublayer is black or dark, thereby providing opaqueness. The color of the first sublayer is adjusted to the color of the surface body and/or to the color (in particular with respect to the transmission and reflection rate) of the carrier body. The first layer is consequently not perceptible from the passenger compartment, thereby providing a homogeneous appearance to the respective interior part.

According to another embodiment the first layer further comprises a third sublayer, the third sublayer having reflective properties. The third sublayer may be arranged on the second sublayer such that it faces the carrier body. Due to the reflective properties of the third sublayer light emitted by the light emitting device and impinging on the third sublayer is redirected back into the carrier body. From the carrier body the light may be reflected such that it penetrates through the filling layer. The exploitation of the light emitted by the emitting device can thus be increased.

According to one embodiment the first sublayer is flush with a primary first filling layer and the second sublayer is flush with a primary second filling layer. According to another embodiment the third sublayer is flush with a primary third filling layer. In these embodiments the first sublayer and the primary first filling layer can be applied in the same application step, in particular by printing. The same is true for the second and third sublayer and the primary second and primary third filling layer that can be applied on the first sublayer and the primary first filling layer by a further application step. The manufacturing process is kept simple and fast.

According to one embodiment the filling layer extends beyond the gaps and embeds the first layer and/or the second layer. In this case the filling layer acts as a kind of sealing for the other layers which are thereby protected from wear, abrasion and other outer influences. As the layers are usually very thin, abrasion may lead to inaccuracies in the light patterns. In this embodiment the light patterns are maintained for a longer time.

According to one embodiment the surface body has a first section of a first thickness including the layers and a second section of a second thickness including the layers. By providing different thicknesses the stiffness of the surface body can be adjusted accordingly. An increased stiffness may be beneficial when the first section is more loaded than the second section. The increased stiffness can thus be restricted to the respective section. It is not necessary to increase the thickness of the entire surface body thereby keeping the manufacturing process short and the material usage low.

A realization of the present invention is directed to a method for manufacturing a surface body of an interior part as described above, the interior part being for a vehicle, comprising the steps of:
- providing a surface body, and
   ∘ printing the first layer and the filling layer on the first surface by means of a printer in the same step, or
   ∘ printing the first layer, the second layer and the filling layer on the first surface, by means of a printer in the same step, or
- providing a surface body, and
   ∘ applying the first layer by means of a first layer application device,
   ∘ drying and/or curing the first layer, and
   ∘ applying the filling layer by means of a filling layer application device.

The technical effects and advantages as discussed with regard to the present interior part equally apply to the vehicle. Briefly, by filling the gaps with the filling layer, optical flaws such as sink marks can be avoided without reducing the quality of the generated light patterns. Moreover, the application of the different layers on the surface body is fairly easy, in particular when the layers can be printed. In this case the layers applied to the surface body may be constituted by ink. In particular using digital printing very individual light patterns may be generated. The customer may provide a graphic file defining a picture when ordering the vehicle. The ink is applied to the surface body such that a light pattern corresponding to the picture included in the graphic file can be generated. A very high degree of individualization is provided.

Other application devices may be cylinders by which the different layers are rolled on the surface body (roll-to-roll printing). Alternatively screen-printing may be used. In this case a screen instead of a roll is used to apply the layers. The throughput of surface bodies generating the same light pattern can thereby be increased.

In a further embodiment of the method after the step of applying the filling layer by means of a filling layer appliance application device the following steps are executed:
- drying and/or curing the filling layer, and
- applying the second layer on the first surface, on the first layer or on the filling layer by means of a second layer application device.

As mentioned the second transmittance of the second layer may be such that the second layer is translucent. Light patterns with areas of different brightness may thus be provided. In case the application device is a cylinder a high number of surface bodies providing such a light pattern may be produced within a short time.

Another embodiment is characterized in that the surface body is bonded to a carrier body after at least the first layer and the filling layer are applied to the surface body. Once all the desired layers are applied the surface body may be bonded to the carrier body.

Another example of the invention is directed to a vehicle comprising an interior part according to one of the embodiments discussed above. The technical effects and advantages as discussed with regard to the present interior part equally apply to the vehicle. Briefly, by filling the gaps with the filling layer optical flaws such as sink marks can be avoided without reducing the quality of the generated light patterns. The present disclosure is described in detail with reference to the drawings attached wherein
- Figure 1: is a principle cross sectional view through an interior part according to the prior art,
- Figure 2: is a principle top view on a vehicle comprising a number of interior parts according to the present disclosure,
- Figure 3: is a principle cross sectional view through an interior part according to a first embodiment of the present disclosure,
- Figure 4: is a principle cross sectional view through an interior part according to a second embodiment of the present disclosure,
- Figure 5: is a principle cross sectional view through an interior part according to a third embodiment of the present disclosure,
- Figure 6A to 6C: is a given light pattern with different sharpness,
- Figure 7: is a principle cross sectional view through an interior part according to a fourth embodiment of the present disclosure,
- Figure 8: is a given light pattern with different brightness,
- Figure 9: is a principle cross sectional view through an interior part according to a fifth embodiment of the present disclosure,
- Figure 10: is a principle cross sectional view through an interior part according to a sixth embodiment of the present disclosure,
- Figure 11: is a principle cross sectional view through an interior part according to a seventh embodiment of the present disclosure,
- Figure 12: is a principle cross sectional view through an interior part according to an eighth embodiment of the present disclosure,
- Figure 13: is a principle cross sectional view through an interior part according to a ninth embodiment of the present disclosure,
- Figure 14: is a principle sketch showing a first method to apply different layers on the surface body, and
- Figures 15A to 15C: are principle sketches showing a second method of applying different layers on the surface body.

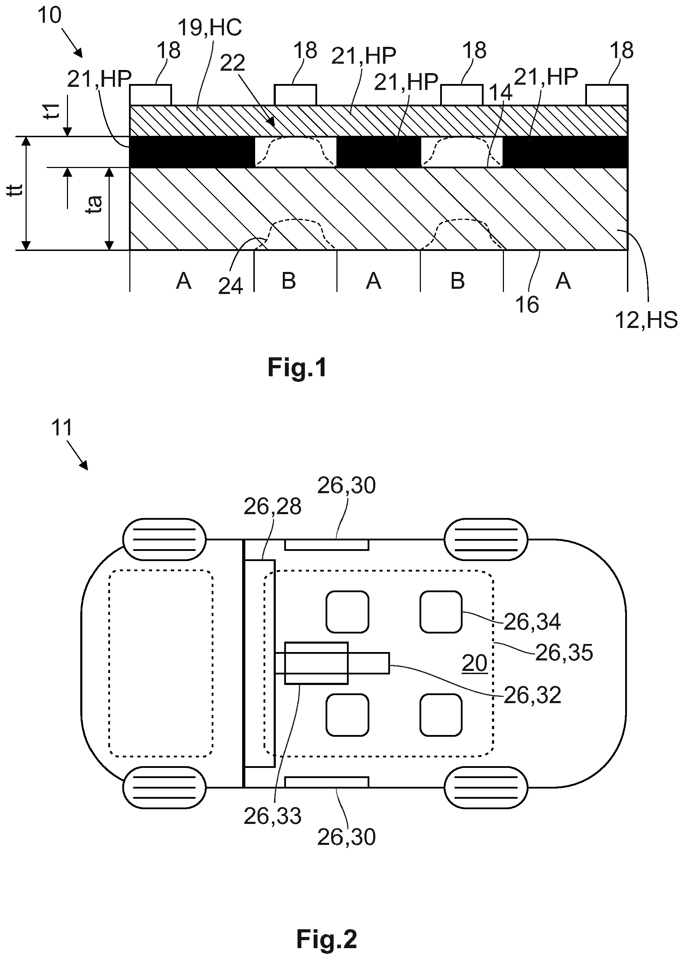

Figure 1 is a principle cross sectional view through an interior part 10 of a vehicle 11 according to the prior art. The interior part 10 comprises a surface body 12 forming a first surface 14 and a second surface 16. The surface body 12 is laminated to a carrier body 19. Moreover, the interior part 10 comprises a light emitting device 18 that emits light. The light emitting device 18 may be embodied as a light guide that is interacting with a light emitting device such as an LED or a light bulb (not shown). The light emitting device 18 introduces the light into the interior part 10 where it emits the light. The light emitting device 18 may be fastened to the carrier body 19. Alternatively the light emitting device 18 may be integrated into the carrier body 19. Particularly in this case the light emitting device 18 may be embodied as textile fibers. The carrier body 19 is transparent or translucent and could be soft or solid. The transmittance HC for light of the carrier body 19 is at least 1% but usually much higher, in particular above 80%.

The light emitting device 18 is arranged relative to the surface body 12 such that the light emitted by the light emitting device 18 impinges on the first surface 14. As the surface body 12 has a transmittance HS for light of at least 1% some of the light penetrates the surface body 12 and leaves the surface body 12 via the second surface 16. The second surface 16 faces the interior of the vehicle 11, in particular the passenger compartment 20 of the vehicle 11. The light that has penetrated the surface body 12 is thus perceptible for passengers present in the passenger compartment 20.

A masking layer 21 is directly applied to the first surface 14. The masking layer 21 only partially covers the first surface 14 such that gaps 22 are formed. The masking layer 21 has a transmittance HP for light which is in this case 0% or almost 0% such that the masking layer 21 is opaque. As a consequence the light that impinges the masking layer 21 cannot penetrate therethrough. The light can only penetrate the surface body 12 in the gaps 22.

The areas marked with A are covered by the masking layer 21 and appear dark whereas areas marked with B are not covered and appear brighter for the passenger situated in the passenger compartment 20. A respective light pattern is created that is visible from the passenger compartment 20.

In the following it is assumed that the masking layer 21 is part of the finished surface body 12. The surface body 12 as such has a surface body thickness ta whereas in the area of the masking layer 21 the surface body 12 has a total thickness tt which is approximately the sum of the surface body thickness ta and a first thickness t1 of the masking layer 21. As a consequence the surface body 12 does not have a constant thickness. The surface body thickness ta is usually in the range between 0.1 and 4 mm whereas the first thickness t1 is between 0.01 and 0.1 mm. Due to the gaps 22 the surface body 12 does not have a constant thickness. As a result, the stiffness varies and therefore sink marks 24 may be generated which are detrimental to a homogeneous appearance of the interior part 10.

Figure 2 shows a vehicle 11 by means of a principle top view that comprises a number of interior parts 26 according to the present disclosure, embodiments of which will be further explained in the following. The interior parts 26 of the vehicle 11 shown in Figure 2 may be embodied as an interior trim part such as instrument panels 28, door panels 30, center consoles 32, overhead consoles 33, vehicle seats 34 and headliners 35.

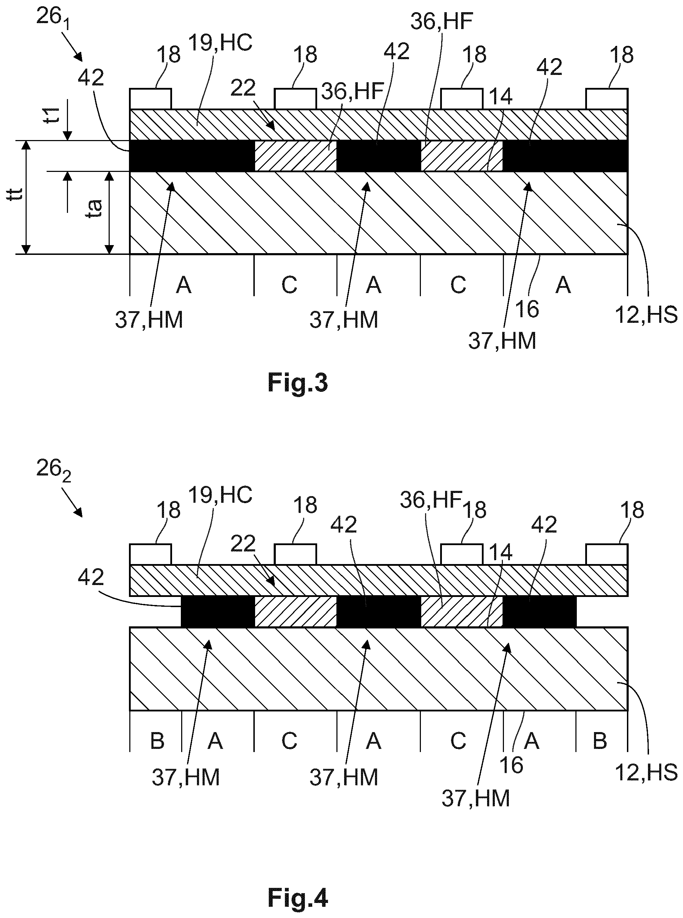

In Figure 3 a first embodiment of an interior part 26₁ of the present disclosure is shown by a principle cross sectional view. The interior part 26₁ of the first embodiment comprises a masking section 37 that is formed by a first layer 42 applied to the first surface 14. The masking section 37 has a masking section transmittance HM for light and forms gaps 22. Moreover, at least one filling layer 36 is applied to the first surface 14 filling at least some of the gaps 22. The finished surface body 12 now has the same or almost the same total thickness tt such that it also possesses the same or almost the same overall physical properties such as thermal resistance and shrinkage. Further the stiffness is similar. The formation of sink marks 24 detrimental to a homogeneous appearance of the interior part 26₁ is effectively avoided.

The filling layer 36 has a filling layer transmittance HF for light that is different from the transmittance HM. In the first embodiment the masking section 37 has a transmittance HM of 0% or close to 0% and is thus opaque. The filling layer 36 transmittance HF is chosen to be as high as possible to approach 100% (transparent). Like in Figure 1 areas marked with A are covered by the masking section 37 and appear dark whereas areas marked with C are covered by the filling layer 36 and appear brighter.

The light pattern provided by the interior part 26₁ according to the first embodiment is almost the same as the one provided by the interior part 10 of the prior art shown in Figure 1. However, as the formation of sink marks 24 (see Figure 1) is avoided the interior part 26₁ as such and the light pattern it provides a more homogeneous appearance compared to the interior part 10 of the prior art. The quality level of the vehicle 11 equipped with an interior part 26₁ of the first embodiment is increased compared to the prior art.

Figure 4 shows a second embodiment of the interior part 26₂ according to the present disclosure. The basic constitution of the second embodiment of the interior part 26₂ is the same as of the first embodiment of the interior part 26₁. The main difference is that the interior part 26₂ of the second embodiment also comprises areas B which are not covered with the filling layer 36 and which are prone to the formation of sink marks 24 as is the case in the interior part 10 of the prior art. However, the areas B are located such that they are not or almost not visible from the passenger compartment 20. Sink marks 24 and respective inaccuracies in the light pattern may thus be tolerable. The manufacturing time and the material usage may thereby be reduced compared to the first embodiment 26₂.

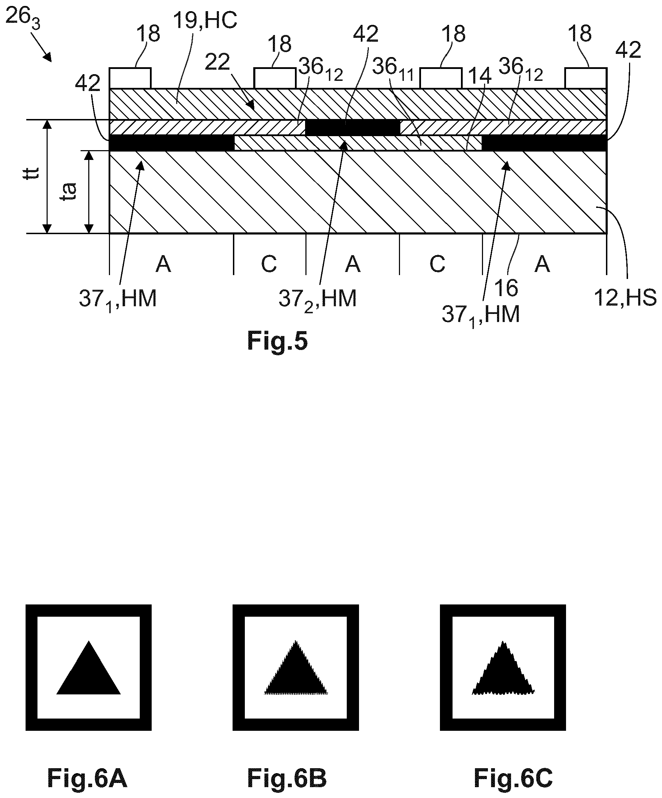

Figure 5 shows a third embodiment of the interior part 26₃ of the present disclosure. In the third embodiment the interior part 26₃ comprises a first masking section 37₁ having the already mentioned first layer 42. Moreover the interior part 26₃ comprises a primary first filling layer 36₁₁. The first layer 42 and the primary first filling layer 36₁₁ are applied to the first surface 14. Further, a second masking section 37₂ comprising a first layer 42 is applied to the primary first filling layer 36₁₁. A secondary first filling layer 36₁₂ is applied partially on the first layer 42 of the first masking section 37₁ and on the primary first filling layer 36₁₁ surrounding the first layer 42 of the second masking section 37₂. As a consequence, the first masking section 37₁ is arranged at a distance further from the light emitting device 18 compared to the second masking section 37₂.

The effect of the different distances is illustrated in Figures 6A to 6C which show a light pattern provided by the interior part 26 according to one of the embodiments described above. The light pattern comprises a triangle encompassed by a frame with a bright area arranged in between. The frame and the triangle may be generated by the first masking section 37₁ and the second masking section 37₂ whereas the bright area may be generated by the primary filling layers 36₁₁, 36₁₂ and 36₁₃. When comparing the light patterns illustrated in Figures 6A to 6C one notes that the triangle and the frame in Figure 6A have a very sharp and clear contour. In Figure 6B the contour of the triangle is more blurred whereas the contour of the frame is still very sharp and clear. In Figure 6C the contour of the triangle is even more blurred whereas the contour of the frame is still very sharp and clear. The degree of blurring can be chosen by the distance of the respective masking section 37₁, 37₂ to the light emitting device 18. The sharpness of a contour generated by the first masking section 37₁ of the third embodiment may thus be different from the sharpness of a contour generated by the second masking section 37₂.

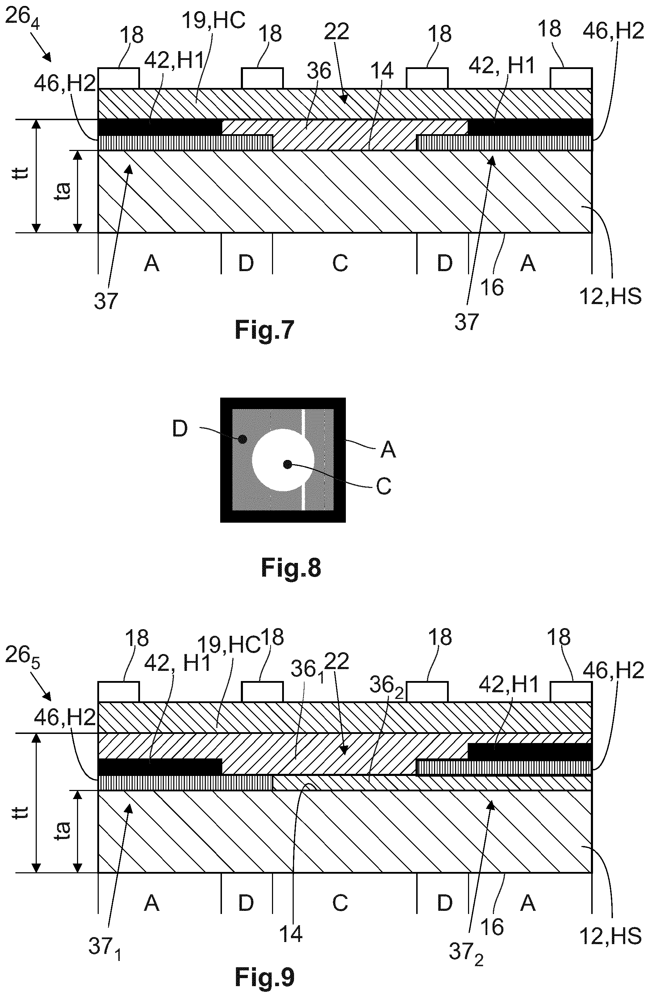

Figure 7 shows a fourth embodiment of the interior part 26₄. The masking section 37 comprises a first layer 42 having a first transmittance H1 and a second layer 46 having a second transmittance H2 for light. The second layer 46 is arranged on the first surface 14. The first layer 42 is arranged on the second layer 46 however, with a certain offset. The offset-area is marked with the letter D. A filling layer 36 is arranged on the first surface 14 between the first layer 42 and the second layer 46.

In this case it is assumed that the first transmittance H1 for light of the first layer 42 is not necessarily opaque, for example between 0 and 20%. The second transmittance H2 is higher than the first transmittance H1 and for example between 50 and 60%. As a result in the area A the light pattern is fairly dark whereas in the offset-area D the pattern is significantly brighter. Area C that is only filled by the filling layer 36 has the highest brightness level.

Figure 8 shows an example of a light pattern that may be created by the interior part 26₄ of the fourth embodiment. Area A is the darkest of the light pattern, area D is brighter than area A and area C is the brightest area.

Figure 9 depicts a fifth embodiment of the interior part 26₃ which is to a fairly large extent similar to the fourth embodiment. A first masking section 37₁ comprises a second layer 46 having a second transmittance H2 for light that is arranged on the first surface 14. Further, the first masking layer 37₁ comprises a first layer 42 with a first transmittance H1 for light arranged on the second layer 46 with a certain offset.

A second filling layer 36₂ having the same composition as the first filling layer 36₁ is arranged on the first surface 14. A second layer 46 of a second masking section 37₂ is applied to the second filling layer 36₂. A first layer 42 is arranged on the second layer 46, however, with a certain offset. The first filling layer 36₁ is also covering the first layer 42 such that the first layer 42 is embedded into the first filling layer 36₁.

In the fifth embodiment the interior part 26₅ provides light patterns both of different sharpness and different brightness.

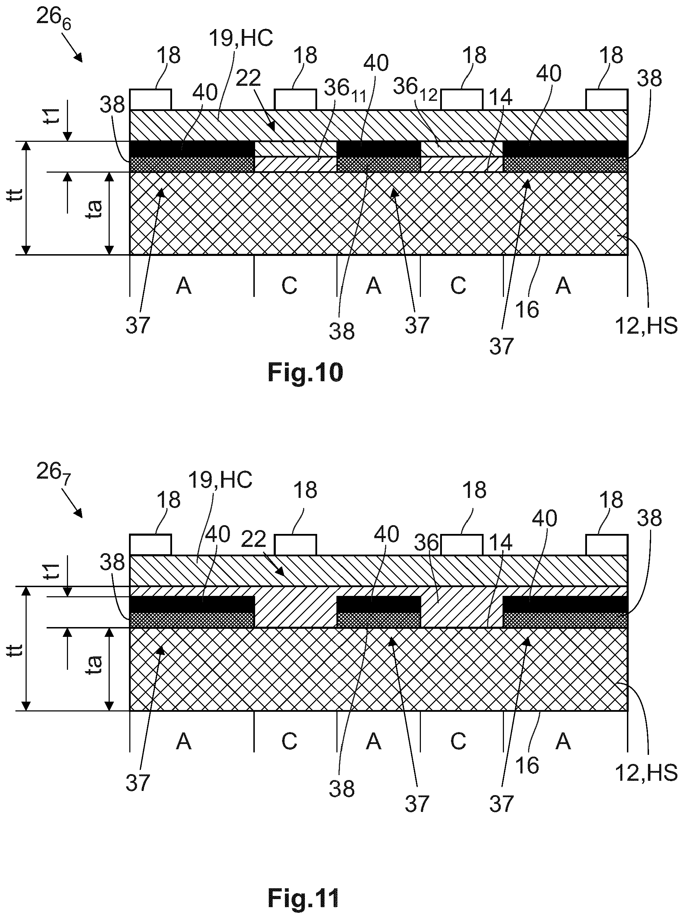

Figure 10 shows a sixth embodiment of an interior part 26₆ of the present disclosure. The basic constitution of the sixth embodiment of the interior part 26₆ is the same as of the first embodiment of the interior part 26₁. In the first embodiment of the interior part 26₁ it is assumed that the surface body 12 is black or dark grey and the first layer 42 formed by the masking section 37 and thus not explicitly shown in Figure 3 is black. The color black provides the highest degree of opacity. As the surface body 12 and the first layer 42 of the first embodiment of the interior part 26₁ have the same or almost the same color the first layer 42 is not visible from the passenger compartment 20.

In the sixth embodiment it is assumed that the surface body 12 has a color significantly different from black such as brown or beige. This color is symbolized by the crosshatching of the surface body 12 in Figure 10. A black first layer (not shown) may thus be perceptible from the passenger compartment 20. Therefore the masking section 37 comprises a first sublayer 38 and a second sublayer 40 which are arranged on top of each other. The first sublayer 38 is directly applied on the first surface 14 of the surface body 12 and has a color that is at least similar to the color of the surface body 12 like brown or beige and/or to the carrier body 19. The second sublayer 40 is black thereby providing the desired opacity. The masking section 37 of the interior part 26₆ of the sixth embodiment is thus not visible from the passenger compartment 20.

The gaps 22 within the first sublayer 38 are filled by a primary first filling layer 36₁₁ whereas the gaps of the second sublayer 40 are filled by a primary second filling layer 36₁₂. The first sublayer 38 is flush with the primary first filling layer 36₁₁ and the second sublayer 40 is flush with the primary second filling layer 36₁₂. It is noted that the composition of the primary first filling layer 36₁₁ and the secondary first filling layer 36₁₂ are the same and equal that of the first filling layer 36 mentioned before.

In Figure 11 a seventh embodiment of the interior part 26₇ is shown which is to a large extent identical to the sixth embodiment of the interior part 26₆ shown in Figure 10. In the seventh embodiment the coherent filling layer 36 extends beyond the gaps 22 and embeds the first masking section 37, in this case the first sublayer 38 and the second sublayer 40. In other words the surface of the second sublayer 40 facing to the light emitting device 18 is covered by the filling layer 36. While the first thickness t1 is the same as in the third embodiment the total thickness tt is bigger compared to the third embodiment.

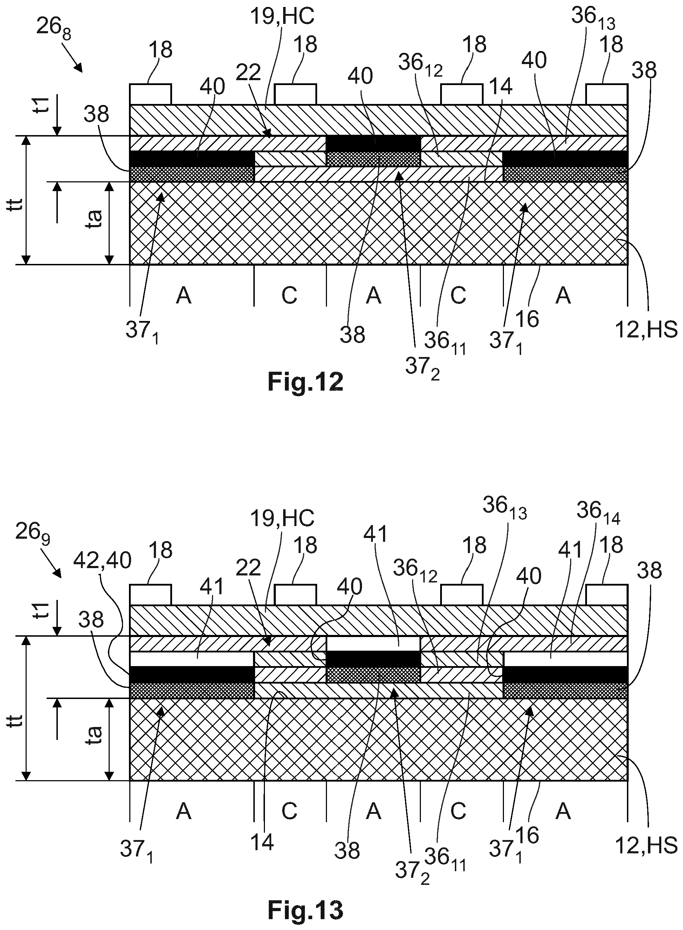

Figure 12 illustrates an eighth embodiment of the interior part 26₈ according to the present disclosure. The basic structure of the interior part 26₈ of the eighth embodiment is the same as of the interior part 26₇ according to the seventh embodiment. The first masking section 37₁ and the second masking section 37₂ are formed by a first sublayer 38 and a second sublayer 40 arranged on top of each other as explained for the sixth and seventh embodiment of the interior part 26₆, 26₇ (see Figures 10 and 11). The second masking section 37₂ is arranged on the primary first filling layer 36₁₁. The secondary first filling layer 36₁₂ is applied on the primary first filling layer 36₁₁ between the first layer 42 and the primary second layer 40. A tertiary first filling layer 36₁₃ is partially applied on the first layer 42 and the secondary first filling layer 36₁₂. The tertiary first filling layer 36₁₃ has the same composition as the other first filling layers 36, 36₁₁, 36₁₂.

In the eighth embodiment the first masking section 37₁ is located a distance further to the light emitting device 18 than the second masking section 37₂ such that light patterns of different sharpness are produced as previously explained.

Figure 13 shows a ninth embodiment of the interior part 26₉. The basic design is the same as the one of the eighth embodiment. However, the first masking section 37₁ and the second masking section 37₂ are formed by the already mentioned first sublayer 38 and the already mentioned second sublayer 40 and additionally by a third sublayer 41, all sublayers 38, 40, 41 arranged on top of each other. A quaternary first filling layer 36₁₄ is partially arranged on the third sublayer 41 and on the tertiary first filling layer 36₁₃. The quaternary first filling layer 36₁₄ has the same composition as the other first filling layers 36, 36₁₁, 36₁₂, 36₁₃.

The third sublayer 41 has reflective properties such that a high degree of light emitted from the light emitting device 18 is reflected back into the carrier body 19. From the carrier body 19 the light may penetrate the first filling layers 36₁₁ to 36₁₄ such that this portion of light may be perceptible from the passenger compartment 20. The exploitation of the emitted light is thus improved.

Also in this case the first masking section 37₁ and the second masking section 37₂ are arranged at different distances from the light emitting devices 18 such that patterns of different sharpness may be created.

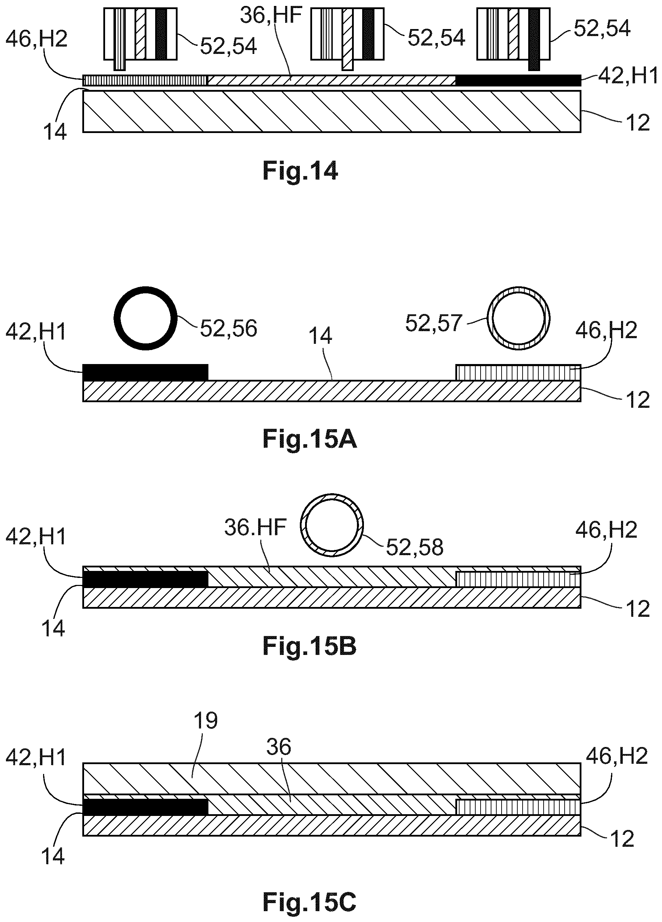

Figure 14 is a principle sketch showing a first method to apply different layers on the surface body 12. In this case a first layer 42 having a first transmittance H1, a second layer 46 having a second transmittance H2 and a filling layer 36 having a filling layer transmittance HF are applied to the first surface 14 of the surface body 12 by means of an application device 52, here by an inkjet printer 54. The first layer 42, the second layer 46 and the filling layer 36 are constituted by ink. While the ink of the first layer 42 may comprise a large number of black pigments the ink of the second layer 46 may comprise a lower number of pigments which may not necessarily be black. The ink of the filling layer 36 may only comprise the matrix but no color pigments. The three inks can be applied by the printer 54 in the same application step.
It is also possible to apply further layers comprising their own first, second and filling layers 21, 46, 36. Highly individual light patterns can thus be generated. Laser printing may also be employed.
Figures 15A to 15C are principle sketches showing a second method to apply different layers on the first surface 14 of the surface body 12. The application device 52 comprises a first layer application device 56, in this case a cylinder or a screen with a scraper by which the first layer 42 may be applied to the first surface 14 of the surface body 12 (Figure
15A). Moreover, the application device 52 comprises a second layer application device 57, also a cylinder by which the second layer 46 may be applied to the first surface 14 of the surface body 12 (Figure 15B). Between the application of the first layer 42 and the second layer 40 a drying and/or curing step is performed.

The filling layer 36 is applied to the first surface 14 by a filling layer application device 58, in this case also a cylinder. The filling layer 36 may be applied such that the first layer 42 is embedded by the filling layer 36 (Figure 15C). This method of applying the layers on the surface body 12 is also referred to as "roll-to-roll printing". Rotary printing, screen printing, transfer printing, offset printing, intaglio printing/rotogravure are similar techniques that may be employed. Depending on the application techniques it may not be possible to apply the filling layer 36 flush with the first layer 42 or the second layer 40 or the third layer 41.

Once the first layer 42, the second layer 46 and the filing layer 36 are applied and dried or cured the surface body is bonded to the carrier body 19, e.g. by laminating (Figure 15C).

### Reference list

- 10: interior part according to the prior art
- 11: vehicle
- 12: surface body
- 14: first surface
- 16: second surface
- 18: light emitting device
- 19: carrier body

- 20: passenger compartment
- 21: masking layer
- 22: gap
- 24: sink marks
- 26: interior part
- 26₁ to 26₉: interior part
- 28: instrument panel

- 30: door panel
- 32: center console
- 33: overhead console
- 34: vehicle seat
- 35: headliner
- 36: filling layer
- 36₁: first filling layer
- 36₁₁: primary first filling layer
- 36₁₂: primary second filling layer
- 36₁₃: primary third filling layer
- 36₁₄: quaternary third filling layer
- 36₂: second filling layer
- 37: masking section
- 37₁: first masking section
- 37₂: second masking section
- 38: first sublayer

- 40: second sublayer
- 41: third sublayer
- 42: first layer
- 46: second layer

- 52: application device
- 54: printer
- 56: first layer application device
- 57: second layer application device
- 58: filling layer application device

- A - D: area
- HC: transmittance of the carrier body
- HF: transmittance of the filling layer
- HM: transmittance of the masking section
- HP: transmittance of the masking layer
- HS: transmittance of the surface body
- H1: first transmittance of the first layer
- H2: second transmittance of the second layer

- ta: surface body thickness
- tt: total thickness
- t1: first thickness

## Claims

1. Interior part (26) for
a vehicle (11), comprising
- at least one carrier body (19) having a transmittance for light (HC) of at least 1%,
- a surface body (12) forming a first surface (14) and a second surface (16), having a transmittance for light (HS) of at least 1% and being laminated to the carrier body (19),
- at least one light emitting device (18) emitting light and arranged such that the light emitted by the light emitting device (18) impinges on the first surface (14),
- a masking section (37) comprising a first layer (42) applied to the first surface (14) and having a masking section transmittance for light (HM), the masking section (37) partially covers the first surface (14) by forming gaps (22), and
- at least one filling layer (36) applied to the first surface (14) at least partially filling at least some of the gaps (22) and having a filling layer transmittance for light (HF),
- the second surface (16) facing the interior of the vehicle (11), **characterized in that**
- the gaps 22) arranged in the sections of the surface body 19), that are not visible from the passenger compartment (2) when the interior part (10) is mounted, are not filled with the filling layer (36).

2. Interior part (26) according to claim 1, **characterized in that** a first masking section (37₁) is applied to the first surface (14) and second masking section 37₂) is applied to the filling layer (36).

3. Interior part (26) according to claim 1,
**characterized in that** the masking section (37) comprises a second layer (46) that is applied
- to the first surface (14),
- to the first surface (14) between the surface body (12) and the first layer (42),
- to the first layer (42), or
- to the filling layer (36),
the second layer (46) having a second transmittance for light (H2).

4. Interior part (26) according to claim 3,
**characterized in that** a primary second layer (48) is applied to the first surface (14) and a secondary second layer (50) is applied to the filling layer (36).

5. Interior part (26) according to one of the preceding claims,
**characterized in that**
- the surface body (12) is of a given color,
- the first layer (42) is formed by a first sublayer (38) and a second sublayer (40) being arranged on top of each other,
- the first sublayer (38) is applied to the first surface (14) and having a color adjusted to the color of the surface body (12).

6. Interior part (26) according to claim 5,
**characterized in that** the first sublayer (38) is flush with a primary first filling layer (36₁₁) and the second sublayer (40) is flush with a primary second filling layer (36₁₂).

7. Interior part (26) according to one of the claims 5 or 6, **characterized in that** the first layer (42) further comprises a third sublayer (41), the third sublayer (41) having reflective properties.

8. Interior part (26) according to claim 7,
**characterized in that** the third sublayer (41) is flush with a primary third filling layer (36₃).

9. Interior part (26) according to one of the preceding claims,
**characterized in that** the filling layer (36) extends beyond the gaps (22) and embeds the first layer (42) and/or the second layer (46).

10. Method for manufacturing a surface body (12) of an interior part of one of the preceding claims, the interior part being for
a vehicle (11), comprising the steps of:
- providing a surface body (12), and
∘ printing the first layer (42) and the filling layer (36) on the first surface (14) by means of a printer (54) in the same step, or
∘ printing the first layer (42), the second layer (46) and the filling layer (36) on the first surface (14), by means of a printer (54) in the same step, or
- providing a surface body (12), and
∘ applying the first layer (42) by means of a first layer application device (56),
∘ drying and/or curing the first layer (42), and
∘ applying the filling layer (36) by means of a filling layer application device (58).

11. Method according to claim 10, **characterized in that** after the step of applying the filling layer (36) by means of a filling layer application device the following steps are executed:
- drying and/or curing the filling layer (36), and
- applying the second layer (46) on the first surface (14), on the first layer (42) or on the filling layer (36) by means of a second layer application device (57).

12. Method according to one of the claims 10 or 11, **characterized in that** the surface body (12) is bonded to a carrier body (19) after at least the first layer (42) and the filling layer (36) are applied to the surface body (12).

13. Vehicle (11), comprising an interior part according to one of the claims 1 to 9 or manufactured by a method according to one of the claims 10 to 12.

## Patentansprüche

1. Innenteil (26) für ein Fahrzeug (11), der aufweist:
- zumindest einen Trägerkörper (19) mit einer Durchlässigkeit für Licht (HC) von zumindest 1 %,
- einen Oberflächenkörper (12), der eine erste Oberfläche (14) und eine zweite Oberfläche (16) bildet, eine Durchlässigkeit für Licht (HS) von zumindest 1 % aufweist und auf den Trägerkörper (19) laminiert ist,
- zumindest eine lichtemittierende Einrichtung (18), die Licht emittiert und so angeordnet ist, dass das durch die lichtemittierende Einrichtung (18) emittierte Licht auf die erste Oberfläche (14) trifft,
- einen Maskierungsabschnitt (37), der eine erste Schicht (42), die auf die erste Oberfläche (14) aufgebracht ist und eine Maskierungsabschnitt-Durchlässigkeit für Licht (HM) aufweist, aufweist, wobei der Maskierungsabschnitt (37) die erste Oberfläche (14) teilweise bedeckt, indem er Lücken (22) bildet, und
- zumindest eine Füllschicht (36), die auf die erste Oberfläche (14) aufgebracht ist, zumindest einige der Lücken (22) zumindest teilweise ausfüllt und eine Füllschicht-Durchlässigkeit für Licht (HF) aufweist,
- wobei die zweite Oberfläche (16) dem Inneren des Fahrzeugs (11) zugewandt ist, **dadurch gekennzeichnet, dass**
- die in den Abschnitten des Oberflächenkörpers (19) angeordneten Lücken (22), die, wenn der Innenteil (10) montiert ist, vom Fahrgastraum (2) aus nicht sichtbar sind, nicht mit der Füllschicht (36) gefüllt sind.

2. Innenteil (26) nach Anspruch 1,
**dadurch gekennzeichnet, dass** ein erster Maskierungsabschnitt (37₁) auf die erste Oberfläche (14) aufgebracht ist und ein zweiter Maskierungsabschnitt (37₂) auf die Füllschicht (36) aufgebracht ist.

3. Innenteil (26) nach Anspruch 1,
**dadurch gekennzeichnet, dass** der Maskierungsabschnitt (37) eine zweite Schicht (46), die
- auf die erste Oberfläche (14),
- auf die erste Oberfläche (14) zwischen dem Oberflächenkörper (12) und der ersten Schicht (42),
- auf die erste Schicht (42), oder
- auf die Füllschicht (36)
aufgebracht ist, aufweist, wobei die zweite Schicht (46) eine zweite Durchlässigkeit für Licht (H2) aufweist.

4. Innenteil (26) nach Anspruch 3,
**dadurch gekennzeichnet, dass** eine primäre zweite Schicht (48) auf die erste Oberfläche (14) aufgebracht ist und eine sekundäre zweite Schicht (50) auf die Füllschicht (36) aufgebracht ist.

5. Innenteil (26) nach einem der vorangehenden Ansprüche,
**dadurch gekennzeichnet, dass**
- der Oberflächenkörper (12) eine bestimmte Farbe aufweist,
- die erste Schicht (42) durch eine erste Teilschicht (38) und eine zweite Teilschicht (40), die übereinander angeordnet sind, gebildet ist,
- die erste Teilschicht (38) auf die erste Oberfläche (14) aufgebracht ist und eine Farbe aufweist, die an die Farbe des Oberflächenkörpers (12) angepasst ist.

6. Innenteil (26) nach Anspruch 5,
**dadurch gekennzeichnet, dass** die erste Teilschicht (38) bündig mit einer primären ersten Füllschicht (36₁₁) ist und die zweite Teilschicht (40) bündig mit einer primären zweiten Füllschicht (36₁₂) ist.

7. Innenteil (26) nach einem der Ansprüche 5 oder 6,
**dadurch gekennzeichnet, dass** die erste Schicht (42) weiterhin eine dritte Teilschicht (41) aufweist, wobei die dritte Teilschicht (41) reflektierende Eigenschaften besitzt.

8. Innenteil (26) nach Anspruch 7,
**dadurch gekennzeichnet, dass** die dritte Teilschicht (41) mit einer primären dritten Füllschicht (36₃) bündig ist.

9. Innenteil (26) nach einem der vorangehenden Ansprüche,
**dadurch gekennzeichnet, dass** sich die Füllschicht (36) über die Lücken (22) hinaus erstreckt und die erste Schicht (42) und/oder die zweite Schicht (46) einbettet.

10. Verfahren zum Herstellen eines Oberflächenkörpers (12) eines Innenteils nach einem der vorangehenden Ansprüche, wobei das Innenteil für ein Fahrzeug (11) bestimmt ist, das die folgenden Schritte aufweist:
- Bereitstellen eines Oberflächenkörpers (12) und
∘ Drucken der ersten Schicht (42) und der Füllschicht (36) auf die erste Oberfläche (14) mittels eines Druckers (54) in demselben Schritt, oder
∘ Drucken der ersten Schicht (42), der zweiten Schicht (46) und der Füllschicht (36) auf die erste Oberfläche (14) mittels eines Druckers (54) in demselben Schritt, oder
- Bereitstellen eines Oberflächenkörpers (12) und
∘ Aufbringen der ersten Schicht (42) mittels einer ersten Schicht-Aufbringeinrichtung (56),
∘ Trocknen und/oder Aushärten der ersten Schicht (42), und
∘ Aufbringen der Füllschicht (36) mittels einer Füllschicht-Aufbringeinrichtung (58).

11. Verfahren nach Anspruch 10, **dadurch gekennzeichnet, dass** nach dem Schritt des Aufbringens der Füllschicht (36) mittels einer Füllschicht-Aufbringeinrichtung die folgenden Schritte ausgeführt werden:
- Trocknen und/oder Aushärten der Füllschicht (36), und
- Aufbringen der zweiten Schicht (46) auf die erste Oberfläche (14), auf die erste Schicht (42) oder auf die Füllschicht (36) mittels einer zweiten Schicht-Aufbringeinrichtung (57).

12. Verfahren nach einem der Ansprüche 10 oder 11, **dadurch gekennzeichnet, dass** der Oberflächenkörper (12) mit einem Trägerkörper (19) verbunden wird, nachdem zumindest die erste Schicht (42) und die Füllschicht (36) auf den Oberflächenkörper (12) aufgebracht worden sind.

13. Fahrzeug (11), das einen Innenteil gemäß einem der Ansprüche 1 bis 9 oder hergestellt durch ein Verfahren gemäß einem der Ansprüche 10 bis 12 aufweist.

## Revendications

1. Pièce (26) intérieure d'un véhicule (11), comprenant :
- au moins un corps (19) de support ayant une transmittance de la lumière (HC) d'au moins 1 %,
- un corps (12) de surface formant une première surface (14) et une deuxième surface (16), ayant une transmittance de la lumière (HS) d'au moins 1 % et étant laminé sur le corps (19) de support,
- au moins un dispositif (18) émettant de la lumière et disposé de manière à ce que la lumière émise par le dispositif (18) émettant de la lumière arrive sur la première surface (14),
- une partie (37) de masquage comprenant une première couche (42) appliquée à la première surface (14) et ayant une transmittance de partie de masquage de la lumière (HM), la partie (37) de masquage recouvrant partiellement la première surface (14) en formant des intervalles (22), et
- au moins une couche (36) de remplissage, appliquée à la première surface (14), remplissant au moins partiellement au moins certains des intervalles (22) et ayant une transmittance de couche de remplissage de la lumière (HF),
- la deuxième surface (16) faisant face à l'intérieur du véhicule (11),
**caractérisée en ce que** les intervalles (22) sont disposés dans les parties du corps (19) de surface, qui ne sont pas visibles de l'habitacle (2) pour les passagers lorsque la pièce (10) intérieure est montée, ne sont pas remplis de la couche (36) de remplissage.

2. Partie (26) intérieure suivant la revendication 1, **caractérisée en ce qu'**une première partie (37₁) de masquage est appliquée à la première surface (14) et une deuxième partie (37₂) de masquage est appliquée à la couche (36) de remplissage.

3. Partie (26) intérieure suivant la revendication 1, caractérisée en ce la partie (37) de masquage comprend une deuxième couche (46) qui est appliquée
- à la première surface (14),
- à la première surface (14) entre le corps (12) de surface et la première couche (42),
- à la première couche (42) ou
- à la couche (36) de remplissage,
la deuxième couche (46) ayant une deuxième transmittance de la lumière (H2).

4. Partie (26) intérieure suivant la revendication 3, **caractérisée en ce qu'**une deuxième couche (48) primaire est appliquée à la première surface (14) et une deuxième couche (50) secondaire est appliquée à la couche (36) de remplissage.

5. Partie (26) intérieure suivant l'une des revendications précédentes,
**caractérisée en ce que**
- le corps (12) de surface a une couleur donnée,
- la première couche (42) est formée par une première sous-couche (38) et une deuxième sous-couche (40) étant disposée au sommet de l'autre,
- la première sous-couche (38) est appliquée à la première surface (14) et a une couleur adaptée à la couleur du corps (12) de surface.

6. Partie (26) intérieure suivant la revendication 5, **caractérisée en ce que** la première sous-couche (38) est à affleurement avec une première couche (36₁₁) primaire de remplissage et la deuxième sous-couche (40) est à affleurement avec une deuxième couche (36₁₂) primaire de remplissage.

7. Partie (26) intérieure suivant l'une des revendications 5 ou 6,
**caractérisée en ce que** la première couche (42) comprend en outre une troisième sous-couche (41), la troisième sous-couche (41) ayant des propriétés réfléchissantes.

8. Partie (26) intérieure suivant la revendication 7, **caractérisée en ce que** la troisième sous-couche (41) est à affleurement avec une troisième couche (36₃) primaire de remplissage.

9. Partie (26) intérieure suivant l'une des revendications précédentes,
caractérisée en ce la couche (36) de remplissage s'étend au-delà des intervalles (22) et intègre la première couche (42) et/ou la deuxième couche (46).

10. Procédé de fabrication d'un corps (12) de surface d'une pièce intérieure de l'une des revendications précédentes, la pièce intérieure étant destinée à un véhicule (11), comprenant les stades de :
- se procurer un corps (12) de surface, et
∘ imprimer la première couche (42) et la couche (36) de remplissage sur la première surface (14), au moyen d'une imprimante (54) dans le même stade, ou
∘ imprimer la première couche (42), la deuxième couche (46) et la couche (36) de remplissage sur la première surface (14) au moyen d'une imprimante (54) dans le même stade, ou
- se procurer un corps (12) de surface, et
∘ appliquer la première couche (42) au moyen d'un dispositif (56) d'application d'une première couche,
∘ sécher et/ou durcir la première couche (42), et
∘ appliquer la couche (36) de remplissage au moyen d'un dispositif (58) d'application d'une couche de remplissage.

11. Procédé suivant la revendication 10, **caractérisé en ce qu'**après le stade d'application de la couche (36) de remplissage, on exécute au moyen d'un dispositif d'application d'une couche de remplissage, les stades suivants :
- séchage et/ou durcissement de la couche (36) de remplissage, et
- application de la deuxième couche (46) à la première surface (14), à la première couche (42) ou à la couche (36) de remplissage au moyen d'un dispositif (57) d'application d'une deuxième couche.

12. Procédé suivant l'une des revendications 10 ou 11, **caractérisé en ce que** le corps (12) de surface est lié à un corps (19) de support après qu'au moins la première couche (42) et la couche (36) de remplissage sont appliquées au corps (12) de surface.

13. Véhicule (11), comprenant une pièce intérieure suivant l'une des revendications 1 à 9 ou fabriquée par un procédé suivant l'une des revendications 10 à 12.
